# EUROPEAN PATENT SPECIFICATION

(11) **EP 4 163 013 B1**
(45) Date of publication and mention of the grant of the patent: **11.11.2026**
(21) Application number: 22196000.8
(22) Date of filing: 15.09.2022
(51) Int. Cl.: B04B 5/04

(54) **ADAPTER FOR TUBES IN A FIXED ANGLE ROTOR**
ADAPTER FÜR ROHRE EINES FESTWINKELROTORS
ADAPTATEUR POUR TUBES DANS UN ROTOR À ANGLE FIXE

(30) Priority: 16.09.2021 US 202163244900 P
(43) Date of publication of application: 12.04.2023
(73) Proprietor: Fiberlite Centrifuge, LLC, Santa Clara, CA 95054 (US)
(72) Inventor: PIRAMOON, Sina, Santa Clara, 95054 (US)
(74) Representative: Ziermann, Oliver

(56) References cited:
- US-A- 5 236 409

## Description

### Technical Field

This invention relates generally to centrifuge rotors having fixed-angle rotor wells and, more particularly, to a rotor well adapter for supporting one or more centrifuge sample tubes within a rotor well of a fixed-angle centrifuge rotor.

### Background

Centrifuge rotors are typically used in laboratory centrifuges to hold samples during centrifugation. While centrifuge rotors may vary significantly in construction and in size, one common rotor structure is the fixed angle rotor having a solid rotor body with a plurality of receiving chambers, or rotor wells, distributed radially within the rotor body and arranged symmetrically about an axis of rotation of the rotor. Samples in appropriately sized sample containers are placed in the plurality of rotor wells, allowing a plurality of samples to be subjected to centrifugation.

Centrifuge rotors are commonly used in high-speed rotation applications where the speed of the centrifuges may exceed hundreds or even thousands of rotations per minute. To withstand the forces experienced during the high speed rotation of the loaded rotor, rotors are typically made from metal or composite materials such as carbon fiber, for example. One example of a fixed angle centrifuge rotor is described in U.S. Patent No. 8,323,169 (owned by the Assignee of the present disclosure).

For fixed-angle rotors in particular, the respective central axes of the rotor wells formed in the rotor have an angular relationship with a central axis of the rotor body, otherwise referred to as the axis of rotation for the rotor, about which the rotor wells are spaced. As a result of the rotor wells being formed as part of the rotor body, the angular orientation of the rotor wells with respect to the central axis of the rotor body is fixed. Thus, the sample containers supported within the rotor wells for centrifugation are subject to the resultant centrifugal forces produced in part by the fixed-angle orientation of the rotor wells.

Typically, the angular relationship between the respective central axes of the rotor wells and the axis of rotation for a fixed-angle rotor is between 20° and 45°, for example. In this regard, the fixed-angle rotor body selected for a particular centrifugation application, and more particularly the specific angle at which the rotor wells are oriented, is typically chosen based on the sample content and type of molecular separation desired. For example, a rotor having rotor wells fixed at an angle of 20° relative to the axis of rotation of the rotor will have a more uniform centrifugal force applied throughout each rotor well and sample contained therein. Compare this to rotor wells fixed at an angle of 40°, which results in a more varied centrifugal force applied along the length of each rotor well and sample.

To accommodate for centrifugation of a number of different sample types, it is often necessary to have an inventory of numerous fixed-angle rotors to cover a range of rotor well configurations. That way, to accommodate for a variety of applications, the appropriate rotor is on hand and can be selected to obtain correct separation of a sample material. To have such a large inventory of rotors can be costly. Furthermore, changing rotors for different centrifugation applications can be time consuming and can also lead to other issues that may require rebalancing of the rotor and centrifuge assembly, for example.

Therefore, to reduce the time and expense required to accommodate for centrifugation of a number of different sample types and sample volumes without the need to change out rotors, it would be desirable to provide an adapter that supports a sample container in a rotor well of a fixed-angle rotor that, when installed in the rotor well, changes the angular orientation of the sample relative to the fixed-angle of the rotor well and axis of rotation of the rotor.

An adaptor for a centrifuge rotor is described in US 5.236.409.

### Summary

The present invention overcomes the foregoing and other shortcomings and drawbacks of fixed-angle rotors for use in centrifugation. While the present invention will be discussed in connection with certain embodiments, it will be understood that the present invention is not limited to the specific embodiments described herein.

According to one embodiment of the invention, a rotor assembly is provided that includes a fixed-angle rotor having a plurality of rotor wells each with a central axis in a fixed angular relationship relative to a rotational axis of the rotor to define a rotor well angle for each rotor well. The rotor assembly further includes an adapter for use with one of the rotor wells. The adapter includes a body that is configured to be received within the rotor well. The body extends between a first end and a second end has a circular cross-sectional shape. The adapter also includes a cavity formed in the body that is configured to receive a sample tube therein. The cavity extends from an opening at the first end of the body to a closed base at the second end of the body and has a longitudinal axis such that when the adapter is positioned within the rotor well the longitudinal axis of the cavity has an angular relationship relative to the rotational axis of the rotor that defines a cavity angle. To this end, the cavity angle is different compared to the rotor well angle.

According to an aspect of the invention, each rotor well may have a circular cross-sectional shape, and may further have a 250mL volume. In another aspect of the invention, the rotor assembly may include at least one sample tube for use with the adapter. In yet another aspect, a volume of the cavity of the adapter may be within a range of between 15mL to 100mL.

According to another embodiment of the invention, an adapter is provided for use with a rotor well of a fixed-angle rotor that has a central axis in a fixed angular relationship relative to a rotational axis of the rotor to define a rotor well angle. The adapter includes a body that extends between a first end and a second end. The body is configured to be received within the rotor well of the fixed-angle rotor of the adapter and has a cross-sectional area that decreases along a length of the body between a neck at the first end and the second end. The cross-sectional area is defined as a plane disposed transverse to the longitudinal axis of the body and that intersects the cavity. The adapter further includes a cavity formed in the body that is configured to receive a sample tube therein. The cavity extends from an opening at the first end of the body to a closed base at the second end of the body and has a longitudinal axis such that when the adapter is positioned within the rotor well of the rotor, the longitudinal axis of the cavity has an angular relationship relative to the rotational axis of the rotor that defines a cavity angle. When so positioned, the cavity angle is different compared to the rotor well angle.

According to yet another embodiment of the invention, an adapter is provided for use with a rotor well of a fixed-angle rotor that has a central axis in a fixed angular relationship relative to a rotational axis of the rotor to define a rotor well angle. The adapter includes a body configured to be received within the rotor well of the fixed-angle rotor. The body extends between a first end and a second end and has a flattened surface that tapers between a neck near the first end to the second end of the body. The adapter further includes a first cavity formed in the body that is configured to receive a sample tube therein. The first cavity extends from an opening at the first end of the body to a closed base at the second end of the body and has a longitudinal axis such that when the adapter is positioned within the rotor well of the rotor the longitudinal axis of the first cavity has an angular relationship relative to the rotational axis of the rotor that defines a first cavity angle. When so positioned, the first cavity angle is different compared to the rotor well angle.

In an aspect of the invention, the flattened surface does not engage the rotor well when the adapter is positioned within the rotor well. In a further aspect, a void is formed between the adapter and the rotor well when the adapter is positioned within the rotor well. In another aspect of the invention, the second end of the adapter only engages with a portion of a base of the rotor well when positioned therein. In yet another aspect of the invention, the first end of the adapter body is circular in cross-sectional shape.

In another aspect of the invention, the first cavity angle is within a range of between 28° to 37°. According to one aspect, the rotor angle is within a range of between 20° to 45°. According to another aspect, the first cavity angle is within a range of between 14° to 17° greater than the rotor well angle. According to yet another aspect, the cavity includes a cavity draft angle within a range of between 0° < and ≤ 1°.

In another aspect of the invention, the body includes a second cavity that extends from an opening at the first end of the body to a closed base at the second end of the body to define a second longitudinal axis of the second cavity. In a further aspect, the first longitudinal axis of the first cavity and the second longitudinal axis of the second cavity have the same angular relationship with the rotational axis of the rotor when the adapter is positioned within the rotor well of the rotor.

In another aspect of the invention, the first end of the body includes an orientation marking configured to be directed away from the rotational axis of the rotor when the adapter is positioned within the rotor well.

In another aspect of the invention, a portion of the first end that partially surrounds the opening to the cavity is recessed in a radially inward direction toward the rotational axis of the rotor.

In another aspect of the invention, the first end of the body includes a stepped surface that transitions from a lower portion to a raised portion, the opening to the cavity being located on the raised portion.

In another aspect of the invention, the body includes one or more hollow areas located within the body and about the cavity.

In another aspect of the invention, the first end of the body includes a bore configured to receive a tool therein for removal of the adapter from the rotor well of the fixed-angle rotor.

In another aspect of the invention, the cavity includes a first bore having an outer diameter that forms the opening of the cavity and a second bore having a smaller outer diameter forms a body of the cavity, the first bore being configured to receive a portion of a sample tube cap therein. In a further aspect, a shoulder is formed between the first and second bores of the cavity, the shoulder being configured to abut the sample tube cap so that a portion of the sample tube cap remains outside of the cavity when the sample tube is positioned therein.

In another embodiment of the invention, a method of manufacturing an adapter for use with a rotor well of a fixed-angle rotor is provided. The method includes providing a computer-readable three-dimensional model defining the adapter. The adapter includes a body that extends extending between a first end and a second end and a cavity formed in the body that is configured to receive a sample tube therein. The body is configured to be received within the rotor well of the fixed-angle rotor. The method further includes forming the adapter from the computer-readable three-dimensional model with a 3D printing machine.

In yet another embodiment of the invention, a computer program product embodied on a non-transitory computer readable medium is provided. The computer program product stores instructions that, when executed, perform the function of forming an adapter via 3D printing. The adapter includes a body that extends between a first end and a second end and a cavity formed in the body that is configured to receive a sample tube therein. The body of the adapter is configured to be received within the rotor well of the fixed-angle rotor. According to one aspect of the invention, the step of forming an adapter via 3D printing further includes forming one or more hollow areas located within the body and about the cavity.

Various additional features and advantages of the invention will become more apparent to those of ordinary skill in the art upon review of the following detailed description of one or more illustrative embodiments taken in conjunction with the accompanying drawings.

### Brief Description of the Drawings

The accompanying drawings, which are incorporated in and constitute a part of this specification, illustrate one or more embodiments of the invention and, together with the general description given above and the detailed description given below, serve to explain the one or more embodiments of the invention.
FIG. 1 is a perspective view of an exemplary centrifuge rotor in accordance with an aspect of the invention.
FIG. 2 is a cross-sectional view of the rotor, illustrating an angular relationship between central axes of the rotor wells and a rotational axis of the rotor.
FIG. 3 is a perspective view of the rotor of FIG. 1, illustrating adapters and corresponding sample tubes for use with the rotor according to aspects of the invention.
FIG. 4 is a top view of the rotor of FIG. 1, illustrating an adapter according to one embodiment of the invention positioned within each rotor well of the rotor.
FIG. 5 is a view similar to that of FIG. 4, illustrating an arrangement of both adapters and bottle assemblies positioned within the rotor wells of the rotor according to an embodiment of the invention.
FIG. 6 is a view similar to that of FIGS. 4 and 5, illustrating an arrangement of different adapter embodiments positioned with the rotor wells of the rotor according to an embodiment of the invention.
FIG. 7 is a cross-sectional view of the rotor, illustrating two rotor wells with adapters positioned therein, and further illustrating an angular relationship between longitudinal axis of a cavity of each adapter and the rotational axis of the rotor.
FIG. 8 is a view similar to FIG. 7, illustrating a different arrangement of adapters positioned within two illustrated rotor wells of the rotor according to an embodiment of the invention.
FIG. 9 is a perspective view of an adapter according to one embodiment of the invention, illustrating an exemplary 3D printing process for manufacturing the adapter.
FIG. 10 is a perspective view of an adapter according to one embodiment of the invention, illustrating an exemplary 3D printing process for manufacturing the adapter.

### Detailed Description

Aspects of the present invention are directed to an adapter for supporting one or more centrifuge sample tubes within a rotor well of a fixed-angle centrifuge rotor for centrifugation of a sample. More particularly, and compared to the fixed angle relationship between the central axis of the rotor well and the axis of rotation of the rotor, embodiments of the adapter vary the angular relationship between the longitudinal axis of the sample tube supported therein and the axis of rotation of the rotor when the adapter is positioned within a rotor well. Thus, the adapters eliminate the need to change rotors to achieve different angular orientations of a sample container for centrifugation, thereby permitting centrifugation of a number of different sample types using a single, fixed-angle rotor.

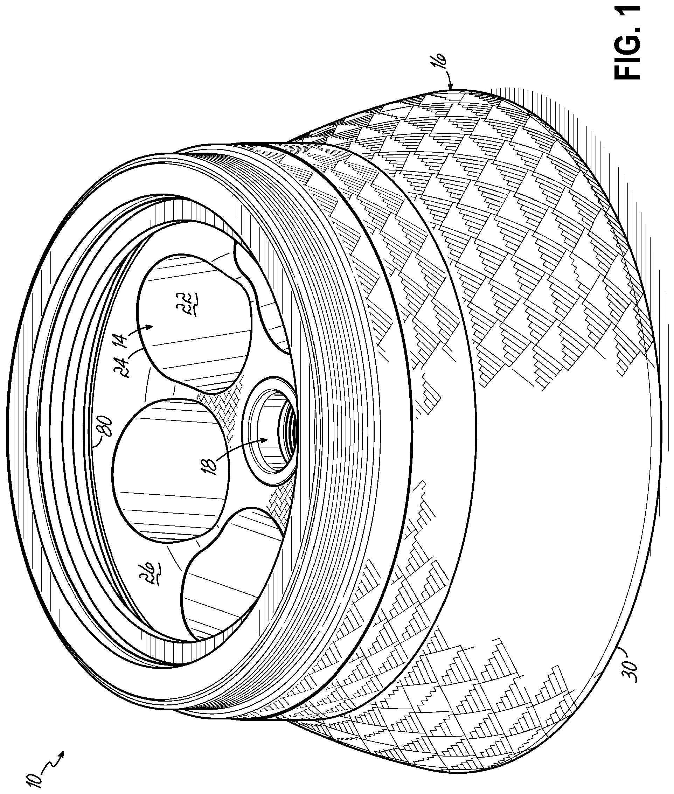

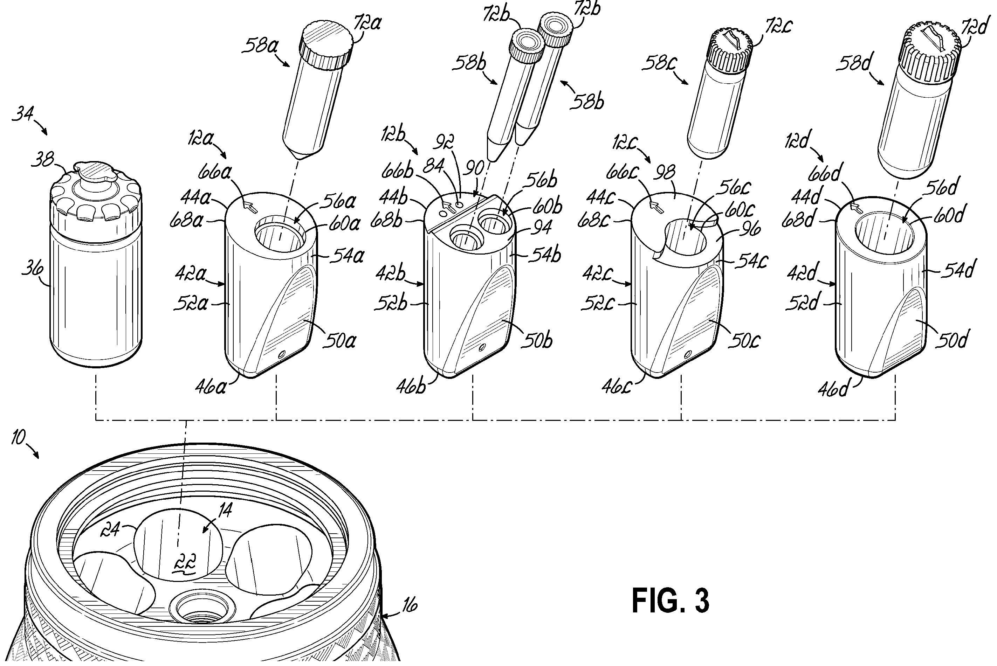

With reference to FIG. 1, details of an exemplary fixed-angle rotor 10 are shown in which adapters 12a, 12b, 12c, 12d (FIG. 3) according to embodiments of the present invention have particular utility. The exemplary fixed-angle rotor 10 may be the rotor fully described U.S. Patent No. 8,323,169, which has six tubular-shaped rotor wells 14 for receiving sample containers therein for centrifugation of a sample. However, while the rotor 10 is shown and described in the context of a fixed-angle rotor having certain characteristics, it will be understood that the same inventive concepts related to embodiments of the adapters 12a, 12b, 12c, 12d may be implemented with different types of fixed-angle rotors having fewer or more rotor wells 14, or rotor wells 14 having different shapes and sizes, for example, without departing from the scope of the invention. To this end, the drawings are not intended to be limiting.

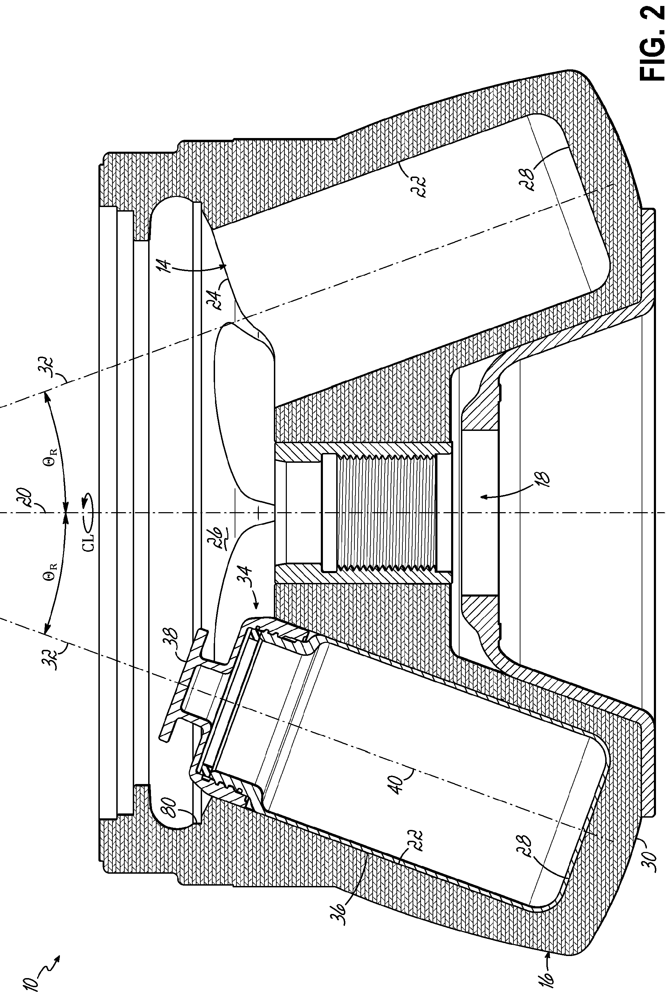

With reference to FIGS. 1 and 2, the fixed-angle rotor 10 has a body 16 with the plurality of rotor wells 14 (otherwise referred to as receiving chambers or cell hole cavities) formed in the body 16 and distributed radially, in a symmetrical arrangement, about a vertical bore 18 formed through the axial center of the rotor 10. The bore 18 is configured to receive a series of hardware such as a hub, hub-retainer, and a lid assembly to secure the rotor 10 to a centrifuge spindle of a centrifuge for high-speed centrifugal rotation of the rotor 10. In this regard, the bore 18 defines a rotational axis 20 (FIG. 2), or axis of rotation, about which the rotor 10 spins. The exemplary rotor 10 is a high-speed rotor used in high rotation applications where the rotational speed of the rotor wells 14 and samples supported therein may exceed thousands or tens of thousands of rotations per minute (rpm). For example, a typical centrifugal application may require that the rotor 10 spin at a rate of between 10,000 to 17,000 rpm, and up to 37,000 rpm, to achieve adequate material separation.

With continued reference to FIGS. 1 and 2, each of the rotor wells 14 formed in the rotor 10 is generally cylindrical in shape, and includes a sidewall 22 that extends from an opening 24 in an upper surface 26 of the rotor to a closed rotor well base 28 near a bottom surface 30 of the rotor 10. Together, the sidewall 22 and base 28 form the cylindrical shape of each rotor well 14. Thus, each rotor well 14 has a generally circular cross-sectional shape. As shown in FIG. 2, each rotor well 14 is fixed at an angle relative to the axis of rotation 20 of the rotor 10, with the opening 24 to each rotor well 14 located closer to the axis of rotation 20 of the rotor 10 compared to the corresponding base 28 of the rotor well 14. More particularly, each rotor well 14 includes a central axis 32, being a line that extends in an elongate direction through the center of each rotor well 14, that has a fixed angular relationship relative to the rotational axis 20 of the rotor 10. The angular relationship between the central axis 32 and the rotational axis 20 of the rotor 10 defines a rotor well angle θ_{R} for each rotor well 14. In the embodiment shown, the rotor well angle θ_{R} for each rotor well 14 is 20°. However, it is understood that this angle θ_{R} may be varied as desired, and the rotor well angle θ_{R} may be any acute angle. More particularly, the rotor well angle θ_{R} may be an angle within the range of between 20° to 45°, for example.

As set forth above, the exemplary rotor 10 is a high-speed fixed-angle rotor. For these types of fixed-angle rotors, it is preferable to include a limited number of rotor wells 14, such as ten or less, for example. In the exemplary embodiment shown, the rotor 10 includes six rotor wells 14. In this regard, each rotor well 14 may be appropriately sized to receive a corresponding cylindrically-shaped centrifuge bottle assembly 34 therein for centrifugation of a sample stored in the bottle assembly 34. For example, the rotor wells 14 may each have a 250mL volume. In another embodiment, the rotor wells 14 may larger, and have a 500mL volume, for example. Regardless, the centrifugal bottle assembly 34 is standard in the industry for centrifugation of samples. In this regard, each rotor well 14 may be appropriately sized to receive a 250mL bottle assembly 34, for example. The bottle assembly 34 may be a super speed bottle assembly such as a Thermo Scientific^{™} Fiberlite^{™} 250mL bottle assembly (catalogue number: 010-1495 or 010-1496, commercially available from the Assignee of the present disclosure), having a sample container 36 configured to hold a volume of a sample and a cap 38 threaded to the sample container 36 for containing the sample in the container 36. A typical centrifugal operation may include placing one bottle assembly 34 containing a volume of a sample in each rotor well 14 for centrifugation of the samples.

As shown in FIG. 2, when the bottle assembly 34 is positioned within a corresponding rotor well 14, a central axis 40 of the bottle assembly 34 is coaxial with the central axis 32 of the rotor well 14. Thus, the bottle assembly 34 is positioned with its central axis 40 displaced at an angle relative to the rotational axis 20 of the rotor 10 that is equal to the rotor well angle θ_{R}. Should a different angular relationship of the bottle assembly 34 relative to the rotational axis 20 of the rotor 10 be desired, the rotor 10 would need to be replaced with a different rotor having different rotor well angles. Moreover, it may be desired to perform centrifugation of several different sample types, or different volumes of samples, using the same rotor, both of which would also require a change of rotors.

Turning now to FIG. 3, details of the different embodiments of adapters 12a, 12b, 12c, 12d for use with the rotor wells 14 of the rotor 10 are shown. More particularly, the exemplary bottle assembly 34 and the adapters 12a, 12b, 12c, 12d are shown arranged over the rotor 10, schematically illustrating how each adapter 12a, 12b, 12c, 12d is configured to be received within a corresponding rotor well 14 for centrifugation of a sample supported by the adapter 12a, 12b, 12c, 12d. As described in further detail below, each adapter 12a, 12b, 12c, 12d includes one or more cavities appropriately sized to support one or more corresponding centrifugal sample tubes therein. The sample tubes hold the liquid samples and may have volumes ranging between 15mL to 100mL, for example. In any event, each adapter 12a, 12b, 12c, 12d is configured such that, when the adapter 12a, 12b, 12c, 12d is inserted in one of the rotor wells 14, the one or more sample tubes supported by each adapter 12a, 12b, 12c, 12d has a different angular relationship relative to the axis of rotation 20 of the rotor 10 compared to the rotor well angle θ_{R}. As will become more clear below, the adapters 12a, 12b, 12c, 12d allow for centrifugation of different sized sample tubes and sample volumes, as well as provide the ability to vary the angular positioning of the sample containers without the need to change rotors.

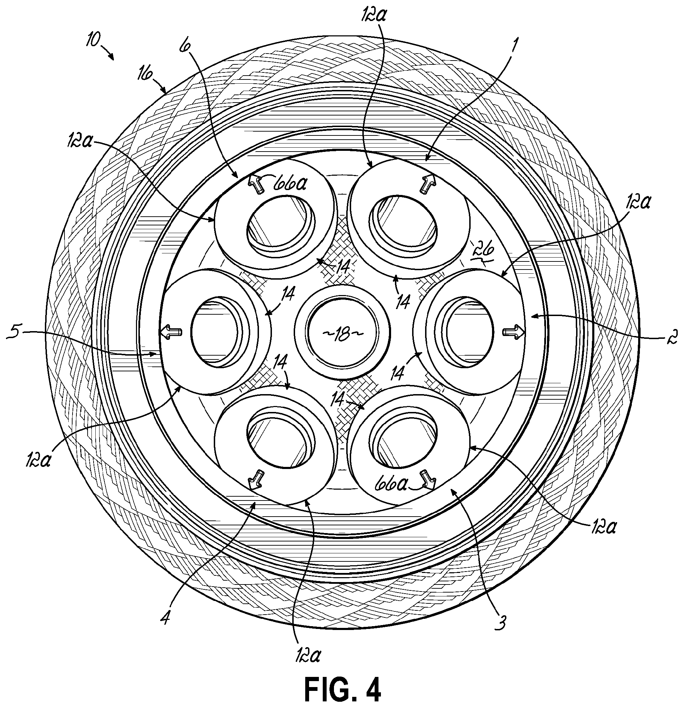

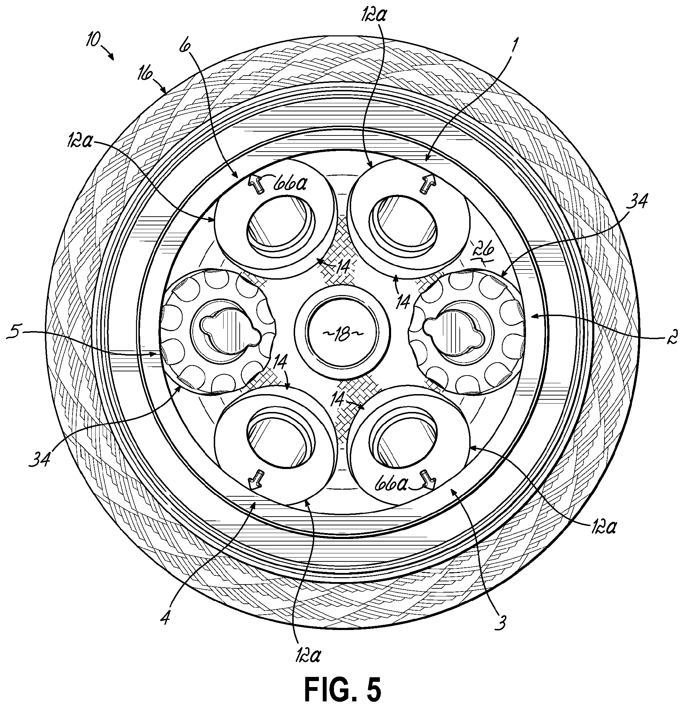

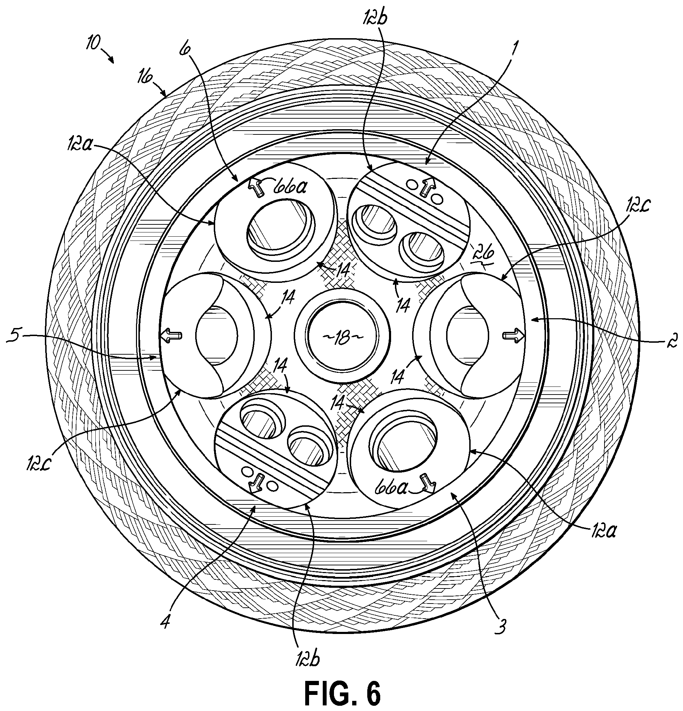

With reference to FIGS. 4-6, the adapters 12a, 12b, 12c, 12d and bottle assembly 34 may be interchangeably inserted into each of the rotor wells 14 to yield various arrangements of adapters 12a, 12b, 12c, 12d and/or bottle assemblies 34 for centrifugation of samples. These figures illustrate only a few of the many possible arrangements. For example, as shown in FIG. 4, one such arrangement consists of installing the same adapter 12a in rotor well 14 positions 1-6, or every rotor well 14. That way, the weight of the rotor 10 is properly balanced for high-speed centrifugal rotation of the rotor 10. In another embodiment, shown in FIG. 5, the rotor 10 may be loaded with the super speed bottle assembly 34 and one type of adapter 12a, for example. In this embodiment, rotor well 14 positions 1, 3, 4, and 6 may be loaded with the adapter 12a and rotor well 14 positions 2 and 5 may be loaded with the super speed bottle assembly 34. It is preferable that rotor well 14 positions opposite each other have corresponding structures to facilitate weight distribution and balancing of the rotor 10. FIG. 6 illustrates another embodiment where the rotor 10 is loaded with three different adapters 12a, 12b, and 12c. More particularly, rotor well 14 positions 1 and 4 include one type of adapter 12b, rotor well 14 positions 2 and 5 include another type of adapter 12c, and rotor well 14 positions 3 and 6 include another type of adapter 12a. It is understood that other arrangements of adapters 12a, 12b, 12c, 12d and/or bottle assemblies 34 are possible. In each instance, it is preferred that rotor well 14 positions opposite each other have corresponding structures to facilitate balancing of the rotor 10.

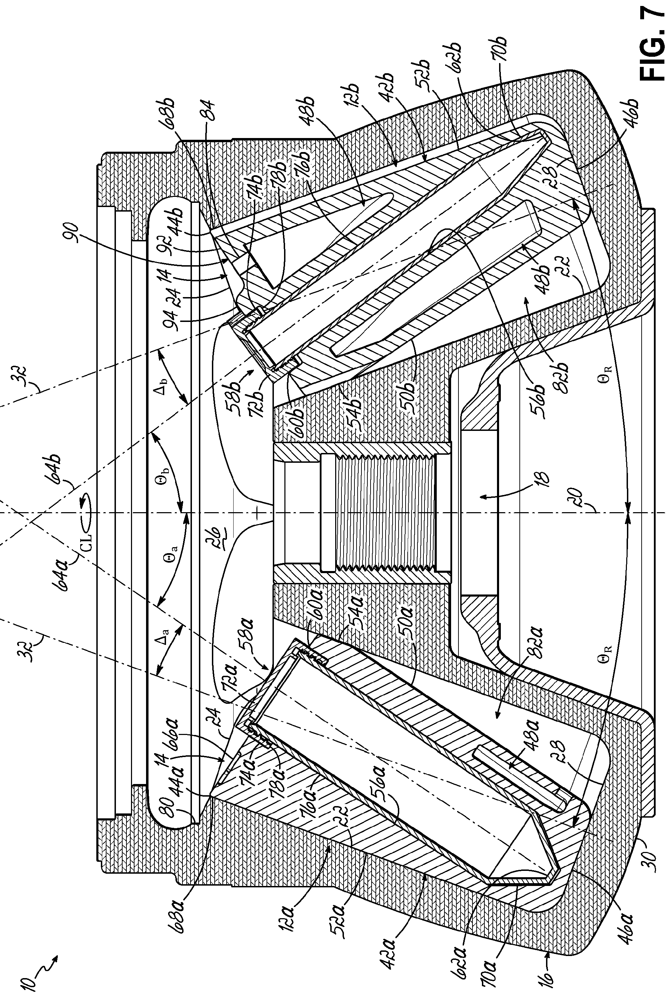

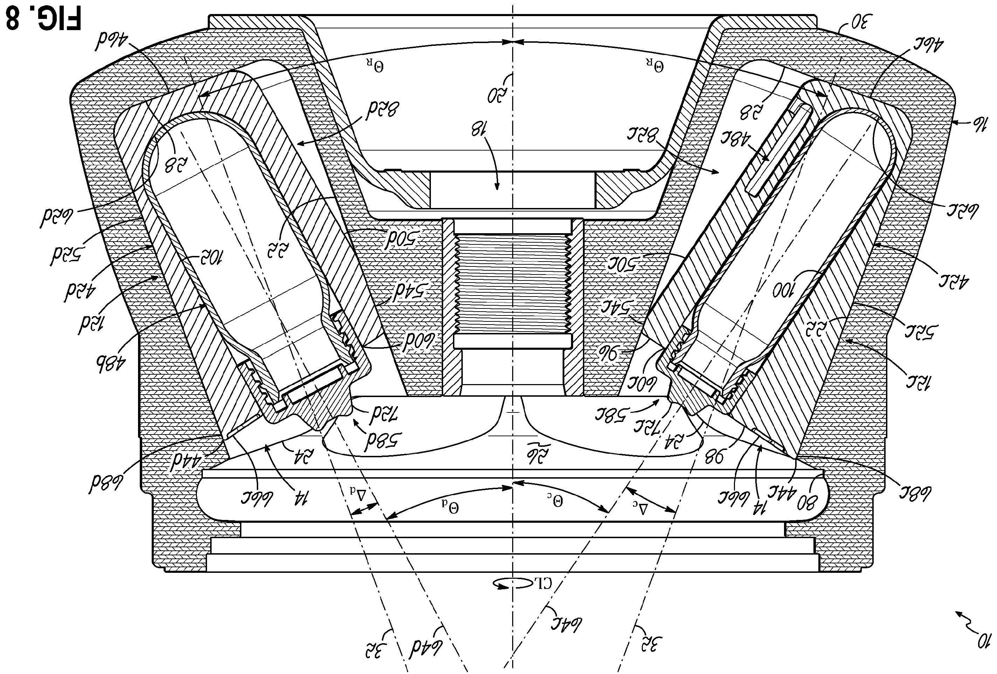

With reference to FIGS. 7 and 8, and continued reference to FIG. 3, details of the different embodiments of the adapters 12a, 12b, 12c, 12d will now be described. In this regard, the adapter 12a according to one embodiment includes a body 42a that extends between a first end 44a and a second end 46a. The body 42a may be formed as solid piece from a thermoplastic polymer, such as polycarbonate or polyoxymethylene (e.g., Delrin^{®}), for example, using known manufacturing methods, such as computer numerical control (CNC) machining and injection molding, for example. Alternatively, the body 42a may be formed as a solid or semi-solid piece having one or more hollow areas 48a located within the body 42a using a three-dimensional printing (3D printing) manufacturing method, as described in further detail below. In the embodiment shown, the body 42a of the adapter 12a is substantially equal in height (e.g., a distance between the first end 44a and second end 46a of the adapter 12a) to the depth of the rotor well 14. The first end 44a and the second end 46a of the body 42a are generally flat, with the first end 44a having cross-sectional shape similar to the cross-sectional shape of the rotor well 14. In the embodiment shown, the cross-sectional shape of the first end 44a of the adapter 12a is circular. In this regard, the adapter 12a is sized to be received within the rotor well 14, and the general footprint of the adapter 12a is cylindrical. The fit between the adapter 12a and the rotor well 14 may be a frictional fit, or slightly less than a frictional fit so that a person can easily insert and remove the adapter 12a from the rotor well 14 by hand.

With reference to FIGS. 3 and 7, the adapter 12a further includes a flattened or truncated surface 50a on a side of the body 42a. The truncated surface 50a intersects a curved outer surface 52a of the body 42a and may serve as a material reduction means to reduce a weight of the adapter 12a, for example. As shown, the truncated surface 50a extends, in a radially inward direction, from a neck 54a proximate the first end 44a to the second end 46a. The tapering configuration of the truncated surface 50a causes the truncated surface 50a to have a generally parabolic shape. In this regard, a vertex of the parabolic-shaped surface 50a is near the first end 44a of the adapter 12a. Furthermore, the truncated surface 50a causes a cross-sectional area of the adapter 12a (the cross-sectional area may be defined as a plane disposed transverse to the longitudinal axis 64a of the body 42a and that intersects the cavity 56a) to change along a length of the adapter 12a between the first end 44a and the second end 46a. More particularly, the cross-sectional area of the adapter 12a is greatest at the first end 44a and through the neck 54a of the body 42a, at which point the cross-sectional area begins to diminish along a length of the truncated surface 50a and in a direction toward the second end 46a of the adapter 12a, where the cross-sectional area of the body 42a is the smallest.

The adapter 12a further includes a cavity 56a formed in the body 42a, the cavity 56a being configured to receive a sample tube of a certain configuration therein. As shown, the cavity 56a is configured to receive a 50mL conical sample tube 58a therein. The cavity 56a extends from an opening 60a at the first end 44a of the body 42a to a closed base 62a at the second end 46a of the body 42a, and includes a longitudinal axis 64a. As shown in FIG. 7, the longitudinal axis 64a extends in an elongate direction through the center of the cavity 60a.

As best seen in FIG. 3, the first end 44a of the adapter 12a may include an orientation marking 66a located on the first end 44a, and more particularly between the opening 60a to the cavity 56a and an outer edge 68a of the first end 44a. The orientation marking 66a is used to indicate proper rotational positioning of the adapter 12a within the rotor well 14 for use. Thus, while the adapter 12a is capable of being positioned within the rotor well 14 in any rotational position, as a result of the corresponding circular cross-sectional shape of the first end 44a of the adapter 12a and rotor well 14, the orientation marking 66a provides a means for consistent positioning of the adapter 12a within the rotor well 14, as described in further detail below. As shown, the orientation marking 66a may be an arrow formed in the first end 44a. However, the orientation marking 66a may be any other suitable marking, such as a dot, line, symbol, number, letter, or text, for example. In an alternative embodiment, the orientation marking 66a may include text in addition to the marking. For example, the text may be located near the marking 66a and read "POINT TO OUTER-RIM" to direct the user how to appropriately position the adapter 12a within the rotor well 14 using the orientation marking 66a. To this end, each adapter 12a is configured to be positioned within a rotor well 14 in a single orientation relative to the axis of rotation 20 of the rotor 10.

While not shown, in one embodiment, the adapter 12a may include a key configured to cooperate with a keyway in the rotor well 14 to properly orient the adapter 12a within the rotor well 14. This configuration may be in addition to the orientation marking 66a, or an alternative. In either case, the key may be an elongate projection located on the body 42a of the adapter 12a that extends a length between the first and second ends 44a, 46a. Similarly, the keyway may be a groove or channel located in the sidewall 22 of the rotor well 14 that is configured to receive the key therein. In this regard, the keyway may extend a length between the opening 24 and base 28 of the rotor well 14. The keyway may be located anywhere within the rotor well 14, however, in a preferred embodiment, the keyway is located proximate the rim 80 of the rotor 10. To properly orient the adapter 12a in the rotor well 14, the key may be located on the body 42a of the adapter 12a diametrically opposite from the truncated surface 50a. It is understood that the key may alternatively be located on the rotor well and the keyway located on the adapter 12a.

Returning to FIGS. 3 and 7, the cavity 56a of the adapter 12a is configured to receive the sample tube 58a therein, and the fit between the cavity 56a and the sample tube 58a may be a frictional fit, or slightly less than a frictional fit so that a person can easily insert and remove the sample tube 58a from the cavity 56a by hand. In this regard, the shape of the cavity 56a generally conforms to the shape of the sample tube 58a. As described in further detail below, to more appropriately conform to the shape of the sample tube 58a, the cavity 56a may further include a cavity draft angle that matches a draft angle of the sample tube 58a. In the embodiment shown, the base 62a of the cavity 56a is conical in shape and includes a sloped sidewall 70a that conforms to the shape of the conical end of the sample tube 58a. The cavity 56a is configured to receive the sample tube 58a and a portion of a cap 72a of the sample tube 58a therein. In this regard, the cavity 56a includes a first bore 74a having an outer diameter that forms the opening 60a of the cavity 56a and a second bore 76a having a smaller outer diameter that forms a body of the cavity 56a. The first bore 74a may be considered a counterbore and is sized to receive a portion of a sample tube cap 72a therein while the second bore 76a and base 62a are sized to receive the remainder of the sample tube 58a. More particularly, a shoulder 78a is formed between the first and second bores 74a, 76a of the cavity 56a. The shoulder 78a is configured to abut the sample tube cap 72a so that a portion of the sample tube cap 72a remains outside of the cavity 56a, as shown in FIG. 7. That way, the sample tube cap 72a remains accessible so that a user can remove the sample tube 58a from the adapter 12a by grasping the exposed portion of the sample tube cap 72a.

The cavity 56a further includes a cavity draft angle that is configured to match, or to closely match, a draft angle of the sample tube 58a. In this regard, commercially available conical-shaped sample tubes typically have a draft angle (i.e., a sloped side wall as a result of a diameter of the sample tube near the sample tube opening being larger than a diameter of the sample tube near the base) within a range of between 0° < and ≤ 1°, for example. Closely matching the cavity draft angle to the draft angle of the sample tube 58a allows for a more consistent distribution of forces along the sample tube 58a when the sample tube 58a is subjected to centrifugal forces by the rotor 10, and thereby reduces the likelihood of sample tube 58a breakage or crazing (i.e., fine cracks or other damage from excessive stretch and stress relaxation). By cavity draft angle, it is meant that an angle or slant is incorporated into the side walls of the cavity 56a such that the side walls are angled relative to the longitudinal axis 64a of the cavity 56a. More particularly, a diameter of the second bore 76a of the cavity 56a is greater near the opening 60a to the cavity 56a compared to a diameter of the second bore 76a near the base 62a of the cavity 56a such that the second bore 76a of the cavity 56a tapers, in a generally uniform manner, along a length of the second bore 76a. As shown, and for the reasons described above, it is preferred for the cavity 56a to include a cavity draft angle when the adapter 12a is configured for use with the conical-shaped sample tube 58a. In this regard, the cavity 56a may include a cavity draft angle that is within a range of between 0° < and ≤ 1°. In the embodiment shown, the cavity draft angle is 1°. In an alternative embodiment, the adapter 12a may be configured for use with one or more round-bottom sample tubes, and each corresponding cavity may not have a cavity draft angle (e.g., the cavity draft angle is 0°), and a cavity draft angle may only be optional as round-bottom sample tubes typically do not have a draft angle.

With reference to FIG. 7, the adapter 12a is shown positioned in the rotor well 14 with the sample tube 58a inserted within the cavity 56a. When so positioned, the adapter 12a and sample tube 58a are ready for high-speed centrifugal rotation of the rotor 10. In the embodiment shown, as both the adapter 12a and rotor well 14 have circular cross-sectional shapes, the orientation marking 66a is useful to ensure proper orientation of the adapter 12a within the rotor well 14. In that regard, the adapter 12a is inserted within the rotor well 14 with the orientation marking 66a positioned furthest away from the axis of rotation 20 of the rotor 10. Where the orientation marking 66a is an arrow, as shown, the arrow is pointed away from the axis of rotation 20 of the rotor 10 and oriented perpendicular to a rim 80 of the rotor 10. Orientation of the adapter 12a in this regard can be seen in FIG. 4, for example.

With continued reference to FIG. 7, when the adapter 12a is positioned within the rotor well 14, the longitudinal axis 64a of the cavity 56a has an angular relationship relative to the rotational axis 20 of the rotor 10 that is different compared to the angular relationship between the central axis 32 of the rotor well 14 and the rotational axis 20 of the rotor 10. The angular relationship between the longitudinal axis 64a of the cavity 56a and the rotational axis 20 of the rotor 10 defines a cavity angle θₐ for the adapter 12a. In the embodiment shown, the cavity angle θₐ for the adapter 12a is 34°. However, it is understood that the cavity angle θₐ may be any acute angle, and more particularly, any angle within the range of between 25° to 50°, for example. As shown, the cavity angle θₐ is greater than the rotor well angle θ_{R} to thereby vary the angular relationship between the sample tube 58a and the axis of rotation 20 of the rotor 10. The difference between the cavity angle θₐ and the rotor angle θ_{R} defines an angular variance Δₐ of the sample tube 58a and sample. In the embodiment shown, the angular variance Δₐ may be 14°, for example. Put simply, θₐ = θ_{R} + Δₐ. As shown, the cavity angle θₐ is 34° which results in an angular variance Δₐ of 14° greater than the rotor well angle θ_{R} relative to the rotational axis 20 of the rotor 10. However, the angular variance Δₐ may be within a range of between 5° to 20°, for example. In another embodiment, the cavity angle θₐ may be less than the rotor well angle θ_{R} relative to the rotational axis 20 of the rotor 10. In that embodiment, the angular variance Δₐ may be within a range of between -5° to - 20°, for example. More preferably, for a rotor having a rotor well angle θ_{R} of 20°, the angular variance Δₐ may be within a range of between -10° to -14°, for example.

To accommodate for the cavity angle θₐ and to ensure that a force exerted on the sample tube 58a is directed downward on the sample tube cap 72a, the first end 44a of the adapter 12a is angled relative to the second end 46a of the adapter 12a. As seen in FIG. 7, the angled nature of the first end 44a relative to the second end 46a causes the sample tube cap 72a to be partially received within the rotor well 14. Thus, the cap 72a is in an intersecting position with a plane defined by the opening 24 to the rotor well 14. Positioning of the sample tube 58a in this regard prevents the cap 72a from becoming unthreaded, or unthreading, from the sample tube 58a during high-speed centrifugal rotation of the rotor 10. To this end, the body 42a of the adapter 12a may have a maximum height that is substantially equal in height to the depth of the rotor well 14, and a minimum height that is less than the depth of the rotor well 14.

With continued reference to FIG. 7, when the adapter 12a is positioned within the rotor well 14, the tapered surface 50a of the adapter 12a is facing the axis of rotation 20 of the rotor 10 and does not engage with any portion of the rotor well 14, and more particularly the sidewall 22 of the rotor well 14. Thus, the only surfaces of the adapter 12a that engage the rotor well 14 are the curved outer surface 52 of the body 42a, including the neck 54a, and the second end 46a. Notably, the second end 46a only engages with a portion of the base 28 of the rotor well 14. In that regard, a void 82a is formed between the adapter 12a and the rotor well 14, and more particularly between a portion of the base 28 and sidewall 22 of the rotor well 14 and the adapter 12a. In the embodiment shown, the void 82a is located between the adapter 12a and the axis of rotation 20 of the rotor 10 when the adapter 12a is positioned within the rotor well 14.

With reference to FIGS. 3 and 7, wherein like numerals represent like features, details of an exemplary adapter 12b are shown in accordance with another embodiment of the present invention. The primary differences between the adapter 12b of this embodiment and the adapter 12a of the previously described embodiment is that the body 42b of the adapter 12b includes two cavities 56b formed therein, the cavities 56b each being configured to receive a sample tube of a certain size. As shown, each cavity 56b is configured to receive a 15mL conical sample tube 58b therein.

With continued reference to FIGS. 3 and 7, the first end 44b of the adapter 12b is formed having a stepped surface 90 that transitions from a lower surface portion 92 to a raised surface portion 94. As shown, the adapter 12b includes an orientation marking 66b located on the lower surface portion 92, and the opening 60b to each cavity 56b is located on the raised surface portion 94. In another embodiment, the first end 44b of the adapter 12b may be flat. In any event, similar to the adapter 12a of the previous embodiment, the adapter 12b further includes a flattened or truncated surface 50b that intersects a curved surface 52b of the adapter body 42b. However, the size of the truncated surface 50b may be smaller compared to the truncated surface 50a of the previous embodiment to accommodate for the two cavities 56b, for example. As shown, the truncated surface 50b extends, in a radially inward direction, from a neck 54b proximate the first end 44b to the second end 46b. Each cavity 56b also extends from an opening 60b at the first end 44b of the body 42b to a closed base 62b at the second end 46b of the body 42b and includes a longitudinal axis 64b. Similar to the adapter 12a of the previously described embodiment, each cavity 56b also includes a cavity draft angle that matches, or closely matches, a draft angle of the sample tube 58b. In the embodiment shown, the base 62b of the cavity 56b is conical in shape and includes a sloped sidewall 70b that conforms to the shape of the conical end of the sample tube 58b. Each cavity 56b has a cavity draft angle of 1°. However, the cavities 56b may include a cavity draft angle within a range of between 0° < and ≤ 1°. For example, the cavities 56b may have no cavity angle when the adapter 12b is configured for use with round-bottom sample tubes, and a cavity draft angle may only be optional. In either case, each cavity 56b further includes a first bore 74b having an outer diameter that forms the opening 60b of the cavity 56b and a second bore 76b having a smaller outer diameter forms a body of the cavity 56b with an annular shoulder 78b therebetween. To this end, a cap 72b of each sample tube 58b is only partially received within each corresponding cavity 56b. The body 42b may be formed as solid piece or, alternatively, a semi-solid piece having one or more hollow areas 48b within the body 42b, as described in further detail below.

With continued reference to FIG. 7, the adapter 12b is configured to be positioned within the rotor well 14 in a similar way as described above with respect to the adapter 12a of the previous embodiment, with the truncated surface 50b facing the axis of rotation 20 of the rotor 10 and the orientation marking 66b positioned furthest away from axis of rotation 20 and near the rim 80 of the rotor 10. Likewise, a void 82b is also formed between the adapter 12b and the rotor well 14. However, the void 82b of this embodiment may be smaller compared to the void 82a of the previous embodiment as a result of the size of the truncated surface 50b. As shown, when the adapter 12b is positioned within the rotor well 14, the cavities 56b are in a side-by-side arrangement to similarly orient each sample tube 58b relative to the axis of rotation 20 of the rotor 10, as described in further detail below.

When the adapter 12b is positioned in the rotor well 14, as shown in FIG. 7, the longitudinal axis 64b of each cavity 56b has the same angular relationship relative to the rotational axis 20 of the rotor 10, which is different compared to the angular relationship between the central axis 32 of the rotor well 14 and the rotational axis 20 of the rotor 10. In this regard, the angular relationship between the longitudinal axis 64b of each cavity 56b and the rotational axis 20 of the rotor 10 defines a cavity angle θ_{b} for each cavity 56b and the adapter 12b. In the embodiment shown, the cavity angle θ_{b} for each cavity 56b is 37°. However, it is understood that the cavity angle θ_{b} may be any acute angle, and more particularly, any angle within the range of between 25° to 50°, for example. As shown, the cavity angle θ_{b} is greater than the rotor well angle θ_{R} to thereby vary the angular relationship between the sample tubes 58b and the axis of rotation 20 of the rotor 10. The difference between the cavity angle θ_{b} and the rotor angle θ_{R} defines an angular variance Δ_{b} of the sample tube 58b and sample. In the embodiment shown, the angular variance Δ_{b} may be 17°, for example. However, the angular variance Δ_{b} may be within a range of between 5° to 20°, for example. In another embodiment, the cavity angle θ_{b} may be less than the rotor well angle θ_{R} relative to the rotational axis 20 of the rotor 10. In that embodiment, the angular variance Δ_{b} may be within a range of between -5° to -20°, for example. More preferably, for a rotor having a rotor well angle θ_{R} of 20°, the angular variance Δ_{b} may be within a range of between -10° to -17°, for example.

As the adapter 12b of this embodiment, and others, is received completely within the rotor well 14, it may be difficult to remove the adapter 12b from the rotor well 14 by hand, for example. Thus, it may be desirable to have a means available on the adapter 12b for receiving a tool to facilitate removal of the adapter 12b from the rotor well 14. In this regard, as shown in FIGS. 3 and 7, the adapter 12b of this embodiment may further include bores 84 formed in the first end 44b of the adapter 12b. Each bore 84 is configured to receive a tool that is used to remove the adapter 12b from the rotor well 14. An exemplary tool that may be used with the bores 84 to remove the adapter 12b from the rotor well 14 is a ball lock pin, such as a "T" handle ball lock pin, for example.

As shown, the bores 84 may be located between the cavity 56b openings 60c and the outer edge 68b of the first end 44b. However, in the embodiment shown, each bore 84 is located in the lower surface portion 92 of the first end 44b of the adapter 12b, with one bore 84 located on either side of the orientation marking 66b. However, the bore 84 may be located elsewhere in the first end 44b, such as in the raised surface portion 94, for example. To this end, one or more bores 84 may be located anywhere on the first end 44b of the adapter 12b of this embodiment or the first ends 44a, 44c, 44d of the adapters 12a, 12c, 12d of other embodiments.

As shown in FIG. 7, each bore 84 extends from an opening in the first end 44b, in a direction generally toward the second end 46b, to an opening to a hollow area 48b within the body 42b of the adapter 12b. For removal of the adapter 12b from the rotor well 14, a diameter of the bore 84 is appropriately sized to receive an operative end of the ball lock pin therethrough. Once fully inserted into the bore 84, the locking ball of the ball lock pin may be released to engage with a portion of the body 42b of the adapter 12b near the bore 84 opening to the hollow area 48a such that the tool may be used to pull the adapter 12b from the rotor well 14 for removal. Once the adapter 12b is removed from the rotor well 14, the locking ball of the ball lock pin may be retracted and the tool removed from the bore 84. In an alternative embodiment, the bore 84 may not extend to a hollow area 48b, and instead may be a blind bore formed in the body 42b of the adapter 12b. This may be the case where the body 42b of the adapter 12b is solid. In this embodiment, the blind bore may have a base portion with a larger diameter compared to that of the bore 84 to define a shoulder therebetween. The shoulder is configured to engage the locking ball of the ball lock pin to remove the adapter 12b of this embodiment from the rotor well 14. While the tool receiving means in the form of bores 84 is shown and described in the context of one adapter 12b embodiment, it will be understood that other adapters 12a, 12c, 12d described herein may benefit from having the same or similar tool receiving means to facilitate removal of the adapters 12a, 12c, 12d from a rotor well 14.

Referring now to FIGS. 3 and 8, wherein like numerals represent like features, details of an exemplary adapter 12c are shown in accordance with another embodiment of the present invention. The primary differences between the adapter 12c of this embodiment and the adapters 12a, 12b of the previously described embodiments is that adapter 12c includes a cavity 56c sized to receive a 50mL sample tube 58c therein. As shown, the sample tube 58c is generally cylindrical with a hemispherical base or round-bottom portion. The first end 44c of the adapter 12c further includes a recessed portion 96 that partially surrounds the opening 60c of the cavity 56c to facilitate removal of the sample tube 58c from the adapter 12c.

With continued reference to FIGS. 3 and 8, the first end 44c of the adapter 12c includes the recessed surface portion 96 that partially surrounds the opening 60c of the cavity 56c. The recessed surface portion 96 is recessed in a downward direction toward the second end 46c of the adapter 12c compared to a raised surface portion 98 on which the orientation marking 66c is located. The orientation marking 66c may be located between the opening 60c to the cavity 56c and an outer edge 68c of the first end 44c. As shown, the raised surface portion 98 also forms part of the cavity 56c opening 60c. Like the previous embodiments described, the cavity 56c also extends from the opening 60c at the first end 44c of the body 42c to a closed base 62c at the second end 46c of the body 42c and includes a longitudinal axis 64c. The cavity 56c of this embodiment further includes a single bore 100 generally cylindrical in shape and having an outer diameter which is substantially similar to an outer diameter of the exemplary sample tube 58c and cap 72c. In comparison to previously described embodiments, the sample tube 58c and cap 72c of this embodiment have the same outer diameter. As shown, the base 62c of the cavity 56c is hemispherical in shape and configured to conform to the spherical shape of the end of the sample tube 58c. In this regard, the cavity 56c is configured to receive the sample tube 58c therein while leaving a portion of the cap 72c exposed, as set forth above. To this end, the cavity 56c of this embodiment does not include a cavity draft angle. However, in an alternative embodiment, the cavity 56c may include a cavity draft angle within a range of between 0° < and ≤ 1°.

Similar to the adapters 12a, 12b of the previous embodiments, the adapter 12c further includes a flattened or truncated surface 50c that intersects a curved surface 52c of the body 42c of the adapter 12c. As shown, the truncated surface 50c extends, in a radially inward direction, from a neck 54c proximate the first end 44c to the second end 46c. However, the size of the truncated surface 50c may be different compared to the truncated surfaces 50a, 50b of the previous embodiments to accommodate for the different configuration of the sample tube 58c, for example. The body 42c may also be formed as solid piece or, alternatively, a semi-solid piece having one or more hollow areas 48c within the body 42c. As shown in FIG. 8, the adapter 12c is configured to be positioned within the rotor well 14 in a similar manner as described above with respect to the adapters 12a, 12b of the previous embodiments, with the truncated surface 50c facing the axis of rotation 20 of the rotor 10 and the orientation marking 66c positioned away from axis of rotation 20 and near the rim 80 of the rotor 10. Likewise, a void 82c is formed between the adapter 12c and the rotor well 14. However, the void 82c of this embodiment may be of a different size compared to the voids 82a, 82b of the previous embodiment as a result of the size difference of the truncated surface 50c.

When the adapter 12c is positioned in the rotor well 14, as shown in FIG. 8, the longitudinal axis 64c of the cavity 56c has an angular relationship relative to the rotational axis 20 of the rotor 10, which is different compared to the angular relationship between the central axis 32 of the rotor well 14 and the rotational axis 20 of the rotor 10. The angular relationship between the longitudinal axis 64c of the cavity 56c and the rotational axis 20 of the rotor 10 defines a cavity angle θ_{c} for the adapter 12c. In the embodiment shown, the cavity angle θ_{c} for the adapter is 34°. However, it is understood that the cavity angle θ_{c} may be any acute angle, and more particularly, any angle within the range of between 25° to 50°, for example. As shown, the cavity angle θ_{c} is greater than the rotor well angle θ_{R} to thereby vary the angular relationship between the sample tube 58c and the axis of rotation 20 of the rotor 10. The difference between the cavity angle θ_{c} and the rotor angle θ_{R} defines an angular variance Δ_{c} of the sample tube 58c and sample. In the embodiment shown, the angular variance may be 14°, for example. However, the angular variance Δ_{c} may be within a range of between 5° to 20°, for example. In another embodiment, the cavity angle θ_{c} may be less than the rotor well angle θ_{R} relative to the rotational axis 20 of the rotor 10. In that embodiment, the angular variance Δ_{c} may be within a range of between -5° to -20°, for example. More preferably, for a rotor having a rotor well angle θ_{R} of 20°, the angular variance Δ_{c} may be within a range of between -10° to -14°, for example.

Referring again to FIGS. 3 and 8, wherein like numerals represent like features, details of an exemplary adapter 12d are shown in accordance with another embodiment of the present invention. The primary differences between the adapter 12d of this embodiment and the adapters 12a, 12b, 12c of the previously described embodiments is that adapter 12d includes a cavity 56d sized to receive a 100mL round-bottom sample tube 58d therein. Notably, the sample tube 58d and cap 72d of this embodiment have the same outer diameter. Thus, like the adapter 12c of the previously described embodiment, the cavity 56d of this embodiment includes a single bore 102 having a diameter which is substantially similar to the outer diameter of the sample tube 58d and cap 72d.

With continued reference to FIGS. 3 and 8, and similar to at least the adapter 12a of the previously described embodiment, the body 42d of the adapter 12d extends between a generally flat first end 44d and second end 46d, and includes the cavity 56d formed therein. The cavity 56d extends from an opening 60d at the first end 44d of the body 42d to a closed base 62d at the second end 46d of the body 42d and includes a longitudinal axis 64d. Further, the base 62d of the cavity 56d is hemispherical in shape to conform to the shape spherical end of the sample tube 58d, and the cavity 56d is configured to receive the sample tube 58d therein such that a portion of the cap 72d remains exposed from the cavity 56d. To this end, the cavity 56c of this embodiment does not include a cavity draft angle. However, in an alternative embodiment, the cavity 56c may include a cavity draft angle with a range of between 0° < and ≤ 1°. In either case, the adapter 12d further includes a flattened or truncated surface 50d that intersects a curved surface 52d of the body 42d of the adapter 12d. As shown, the truncated surface 50d extends, in a radially inward direction, from a neck 54d proximate the first end 44d to the second end 46d. However, the size of the truncated surface 50d may be smaller compared to the truncated surfaces 50a, 50b, 50c of the previously described embodiments to accommodate for the shape and size of the sample tube 58d, for example. The body 42d may also be formed as solid piece or, alternatively, a semi-solid piece having one or more hollow areas within the body 42d about the cavity 56d which may be similar to those designated 48a, 48b, 48c for adapters 12a, 12b, 12c.

As shown in FIG. 8, the adapter 12d is configured to be positioned within the rotor well 14 in a similar manner as described above with respect to the adapters 12a, 12b, 12c of the previous embodiments, with the truncated surface 50d facing the axis of rotation 20 of the rotor 10 and the orientation marking 66d positioned furthest away from axis of rotation 20 and near the rim 80 of the rotor 10. The orientation marking 66d may be located between the opening 60d to the cavity 56d and the outer edge 68d of the first end 44d. Likewise, a void 82d is formed between the adapter 12d and the rotor well 14. However, the void 82d of this embodiment may be smaller compared to the voids 82a, 82b, 82c of the previous embodiments. In any event, when the adapter 12d is positioned in the rotor well 14, as shown in FIG. 8, the longitudinal axis 64d of the cavity 56d has an angular relationship relative to the rotational axis 20 of the rotor 10, which again is different compared to the angular relationship between the central axis 32 of the rotor well 14 and the rotational axis 20 of the rotor 10. The angular relationship between the longitudinal axis 64d of the cavity 56d and the rotational axis 20 of the rotor 10 defines a cavity angle θ_{d} for the cavity 56d and adapter 12d. In the embodiment shown, the cavity angle θ_{d} for the adapter is 34°. However, it is understood that the cavity angle θ_{d} may be any acute angle, and more particularly, any angle within the range of between 25° to 50°, for example. As shown, the cavity angle θ_{d} is greater than the rotor well angle θ_{R} to thereby vary the angular relationship between the sample tube 58d and the axis of rotation 20 of the rotor 10. The difference between the cavity angle θ_{d} and the rotor angle θ_{R} defines an angular variance Δ_{d} of the sample tube 58d and sample. In the embodiment shown, the angular variance Δ_{d} may be 14°, for example. However, the angular variance Δ_{d} may be within a range of between 5° to 20°, for example. In another embodiment, the cavity angle θ_{d} may be less than the rotor well angle θ_{R} relative to the rotational axis 20 of the rotor 10. In that embodiment, the angular variance Δ_{d} may be within a range of between 0° to -20°, for example. More preferably, for a rotor having a rotor well angle θ_{R} of 20°, the angular variance Δ_{d} may be within a range of between 0° to -10°, for example.

In one embodiment, one or more of the rotor wells 14 may further include at least one notch to facilitate removal of the adapter 12a, 12b, 12c, 12d therefrom. The notch may be formed in the upper surface 26 of the rotor 10 at the rotor well opening 24. More particularly, the notch is a recess or concavity (in a direction towards the bottom surface 30 of the rotor 10) in the upper surface 26 of the rotor 10 at the rotor well opening 24 that is sized to expose a sufficient portion of the adapter 12a, 12b, 12c, 12d so that the adapter 12a, 12b, 12c, 12d may be pulled or removed from the rotor well 14. Thus, the notch is appropriately sized to permit removal of the adapter 12a, 12b, 12c, 12d from the rotor well 14 by hand, tool, or both. The notch may be located between the rotor well 14 and the rim 80 of the rotor 10, for example. In another embodiment, the notch may be located between the rotor well 14 and the axis of rotation 20 of the rotor 10. In another embodiment, a notch may be located on either side of the rotor well 14. However, it is understood that each rotor well 14 may include one or more notches located at any position about the rotor well opening 24.

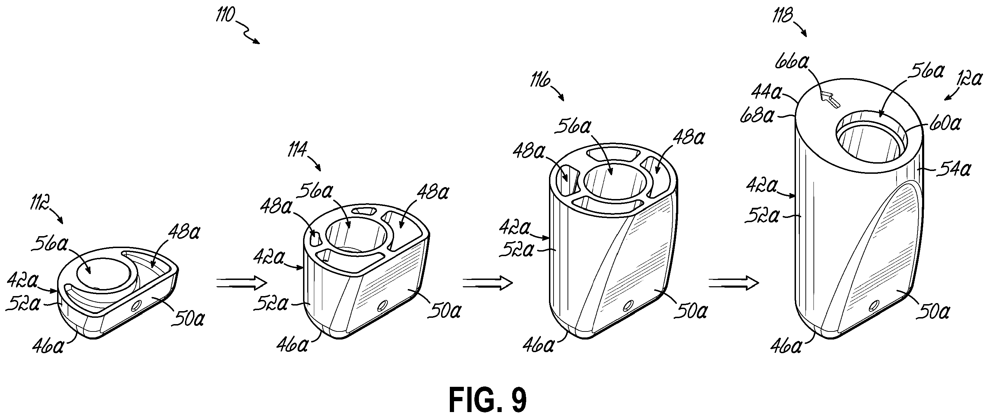

As set forth above, each of the adapters 12a, 12b, 12c, 12d may be formed as a semi-solid piece having one or more hollow areas 48a, 48b, 48c, 48d located within the body 42a, 42b, 42c, 42d. In this regard, FIG. 9 illustrates an exemplary process 110 for forming one adapter 12a using a 3D-printing manufacturing method according to an embodiment of the invention. The term "three-dimensional printing" or "additive manufacturing" or "rapid prototyping" refers to a process of making a three-dimensional solid object of virtually any shape from a digital model. 3D printing of the adapter 12a is achieved using an additive process, where successive layers of material are laid down in different shapes to build the structures that define the adapter 12a. The term 3D printing, as used herein, may refer to methods such as, but not limited to, selective laser melting (SLM), direct metal laser sintering (DMLS), selective laser sintering (SLS), fused deposition modeling (FDM), and stereolithography (SLA). Further, any type of 3D printing machine that can print the materials described herein may be used. While the exemplary method is discussed and described with respect to one embodiment of the adapter 12a, it is understood that any of the adapters 12a, 12b, 12c, 12d may be formed using these manufacturing methods.

Before 3D printing of the adapter 12a may begin, a 3D printing machine (not shown) being used to form the adapter 12a must first receive a dataset corresponding to the adapter 12a. The dataset may be a computer-readable three-dimensional model suitable for use in manufacturing the adapter 12a. In particular, the model includes information regarding the characteristics of the adapter 12a from which the 3D printing machine can form the adapter 12a. The model may be a 3D printable file such as an Stereolithography file, for example. The dataset may also be in the form of a computer program product embodied on a non-transitory computer readable medium storing executable instructions for forming the adapter using a 3D printing machine.

Computer-readable storage media, which is inherently non-transitory, may include volatile and non-volatile, and removable and non-removable tangible media implemented in any method or technology for storage of data, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store data and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device or server via a network.

Computer-readable program instructions stored in a computer-readable medium may be used to direct a computer, other types of programmable data processing apparatuses, or other devices to function in a particular manner, such that the instructions stored in the computer-readable medium produce an article of manufacture including instructions that implement the functions, acts, or operations specified in the flowcharts, sequence diagrams, or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, or operations specified in the text of the specification, flowcharts, sequence diagrams, or block diagrams.

Once the 3D printing machine has been provided with a model or computer-readable program instructions suitable for use in manufacturing the adapter 12a, the 3D printing machine may be operated to lay down successive layers of the desired material to build the adapter 12a, as shown in FIG. 9, which illustrates the adapter 12a being formed via a series of cross-sections. The material used to form the adapter may be, for example, plastics such as the Accura^{®} ClearVue^{™} polycarbonate-like plastics commercially available from 3D Systems. As shown, the adapter 12a is 3D printed such that the adapter 12a is built vertically on a substrate (not shown). More particularly, the 3D printing machine begins by forming the second end 46a of the adapter 12a, illustrated by a first cross-section 112. As can be seen, the body 42a of the adapter 12a, cavity 56a, and hollow areas 48a begin to take shape. As the 3D printing machine continues to vertically build the adapter 12a by laying down successive layers of material, more of the body 42a takes shape, including the cavity 56a and hollow areas 48a located therearound, as illustrated by a second cross-section 114. More of the printed adapter 12a is shown in a third cross-section 116, illustrating the hollow areas 48a which may be separated by walls of material that form part of the body 42a of the adapter 12a. The fourth view 118 is of the finished adapter 12a, which is shown having a smooth finish. In this regard, Some 3D printing machines form objects with coarse surfaces, burrs, and residue powder that are not sufficiently smooth, and a certain degree of finishing may be necessary. Finishing may consist of electropolishing, laser micro machining, or other process to smooth the surfaces of the adapter 12a, for example.

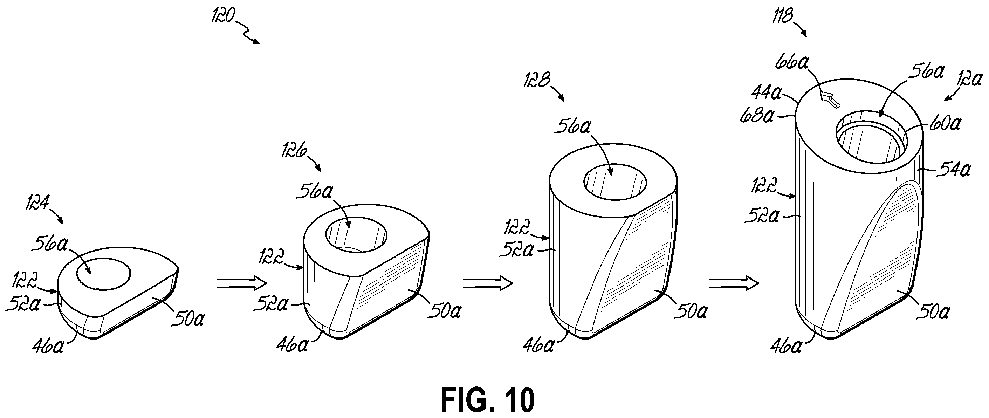

FIG. 10 illustrates an exemplary process 120 for forming the adapter 12a having a solid body 122 using a 3D-printing manufacturing method according to another embodiment of the invention. As shown, the adapter 12a is formed in layers from a digital model, as described above, using a printing machine to build up the adapter 12a in layers. In this regard, the printing of the material can be by directly depositing material of which the 3D printed adapter 12a is made. As shown in a first cross-section 124, the printing machine first forms the second end 46a and the body 122 with the cavity 56a therein. Cross-sections 126 and 128 further illustrate the adapter 12a being formed as material is deposited from the printing machine in uniform layers in the shape of a cross section or slice of the adapter 12a. The fourth view 118 is of the finished adapter 12a having a solid body 122 and a smooth finish. The process described with reference to FIG. 10 differs from the process described in FIG. 9 in not forming hollow areas 48a, but rather in forming an adapter that is "solid" but for cavity 56a. Such adapters may also be fabricated using machining methods to form the shape of the adapter. For example, one manufacturing method to form the adapter 12a having a solid body 122 is to use CNC machines and a cylindrical bar of polycarbonate or any other suitable engineered plastic such as Delrin^{®}, and to machine the cavity 56a therein in a specified angle. CNC machines may be used to machine the truncated surface 50a and other aspects of the adapter 12a as well.

## Claims

1. An adapter (12a, 12b, 12c, 12d) for use with a rotor well (14) of a fixed-angle rotor (10), the rotor well having a central axis (32) in a fixed angular relationship relative to a rotational axis (20) of the rotor to define a rotor well angle, comprising:
a body (42a, 42b, 42c, 42d) extending between a first end (44a, 44b, 44c, 44d) and a second end (46a, 46b, 46c, 46d) and having a cross-sectional area that decreases along a length of the body between a neck at the first end and the second end, the body configured to be received within the rotor well of the fixed-angle rotor; and
a cavity (56a, 56b, 56c, 56d) formed in the body and being configured to receive a sample tube therein, the cavity extending from an opening at the first end of the body to a closed base at the second end of the body, the cavity having a longitudinal axis such that when the adapter is positioned within the rotor well of the rotor the longitudinal axis of the cavity has an angular relationship relative to the rotational axis of the rotor that defines a cavity angle;
wherein the cross-sectional area is defined as a plane disposed transverse to the longitudinal axis of the body and that intersects the cavity; and
wherein the cavity angle is different compared to the rotor well angle.

2. The adapter of claim 1, wherein the body extending between the first end and the second end has a flattened surface (50a, 50b, 50c, 50d) that tapers between a neck near (54a, 54b, 54c, 54d) the first end to the second end of the body and the cavity is a first cavity.

3. The adapter of claim 2, wherein the first end is circular in cross-sectional shape.

4. The adapter of claim 2, wherein the body includes a second cavity that extends from an opening at the first end of the body to a closed base at the second end of the body to define a second longitudinal axis of the second cavity.

5. The adapter of claim 4, wherein the first longitudinal axis of the first cavity and the second longitudinal axis of the second cavity have the same angular relationship with the rotational axis of the rotor when the adapter is positioned within the rotor well of the rotor.

6. The adapter of claim 2, wherein the cavity includes a first bore (74a) having an outer diameter that forms the opening of the cavity and a second bore (76a) having a smaller outer diameter forms a body of the cavity, the first bore being configured to receive a portion of a sample tube cap therein.

7. The adapter of claim 6, wherein a shoulder (78a) is formed between the first and second bores of the cavity, the shoulder being configured to abut the sample tube cap so that a portion of the sample tube cap remains outside of the cavity when the sample tube is positioned therein.

8. A rotor assembly, comprising:
a fixed-angle rotor having a plurality of rotor wells, each rotor well having a central axis in a fixed angular relationship relative to a rotational axis of the rotor to define a rotor well angle for each rotor well; and an adapter of any of the claims 1 - 7.

9. The rotor assembly of claim 8, comprising an adapter of claim 2, wherein the flattened surface does not engage the rotor well when the adapter is positioned within the rotor well.

10. The rotor assembly of claim 9, wherein a void is formed between the adapter and the rotor well when the adapter is positioned within the rotor well, or, alternatively, wherein the second end of the adapter only engages with a portion of a base of the rotor well when positioned therein.

11. The rotor assembly of claim 8, comprising an adaptor of claim 2, wherein the first end of the body includes an orientation marking (66a) configured to be directed away from the rotational axis of the rotor when the adapter is positioned within the rotor well, or wherein a portion of the first end that partially surrounds the opening to the cavity is recessed in a radially inward direction toward the rotational axis of the rotor, or wherein the first end of the body includes a stepped surface (90) that transitions from a lower portion to a raised portion, the opening to the cavity being located on the raised portion or, wherein the body includes one or more hollow areas (48b) located within the body and about the cavity.

12. A method of manufacturing an adapter for use with a rotor well of a fixed-angle rotor, comprising:
providing a computer-readable three-dimensional model defining the adapter, wherein the adapter comprises a body extending between a first end and a second end and having a cavity formed in the body and being configured to receive a sample tube therein, and wherein the adapter is an adapter according to any of the claims 1 - 7, the body configured to be received within the rotor well of the fixed-angle rotor; and
forming the adapter from the computer-readable three-dimensional model with a 3D printing machine.

13. A computer program product embodied on a non-transitory computer readable medium storing instructions that, when executed, perform the following functions:
forming an adapter via 3D printing, wherein the adapter comprises a body extending between a first end and a second end and having a cavity formed in the body and being configured to receive a sample tube therein, and wherein the adapter is an adapter according to any of the claims 1 - 7, the body configured to be received within the rotor well of the fixed-angle rotor.

14. The computer program product of claim 13, wherein the step of forming an adapter via 3D printing further includes:
forming one or more hollow areas located within the body and about the cavity.

## Patentansprüche

1. Adapter (12a, 12b, 12c, 12d) zur Verwendung mit einer Rotorvertiefung (14) eines Festwinkelrotors (10), wobei die Rotorvertiefung eine Mittelachse (32) aufweist, die in einer festen Winkelbeziehung relativ zu einer Drehachse (20) des Rotors steht, um einen Rotorvertiefungswinkel zu definieren, umfassend:
einen Körper (42a, 42b, 42c, 42d), der sich zwischen einem ersten Ende (44a, 44b, 44c, 44d) und einem zweiten Ende (46a, 46b, 46c, 46d) erstreckt und eine Querschnittsfläche aufweist, die über die Länge des Körpers zwischen einem Hals am ersten Ende und dem zweiten Ende abnimmt, wobei der Körper so konfiguriert ist, dass er in die Rotorvertiefung des Festwinkelrotors aufgenommen wird; und einen Hohlraum (56a, 56b, 56c, 56d), der im Körper gebildet und so konfiguriert ist, dass er ein Probenröhrchen darin aufnimmt, wobei sich der Hohlraum von einer Öffnung am ersten Ende des Körpers bis zu einem geschlossenen Boden am zweiten Ende des Körpers erstreckt, wobei der Hohlraum eine Längsachse aufweist, sodass, wenn der Adapter in der Rotorvertiefung des Rotors positioniert wird, die Längsachse des Hohlraums eine Winkelbeziehung relativ zur Drehachse des Rotors aufweist, die einen Hohlraumwinkel definiert;
wobei die Querschnittsfläche als eine Ebene definiert ist, die quer zur Längsachse des Körpers verläuft und den Hohlraum schneidet; und wobei sich der Hohlraumwinkel im Vergleich zum Rotorvertiefungswinkel unterscheidet.

2. Adapter nach Anspruch 1, wobei der Körper, der sich zwischen dem ersten Ende und dem zweiten Ende erstreckt, eine abgeflachte Oberfläche (50a, 50b, 50c, 50d) aufweist, die sich zwischen einem Hals in der Nähe (54a, 54b, 54c, 54d) des ersten Endes bis hin zum zweiten Ende des Körpers verjüngt und wobei der Hohlraum ein erster Hohlraum ist.

3. Adapter nach Anspruch 2, wobei das erste Ende eine kreisförmige Querschnittsform aufweist.

4. Adapter nach Anspruch 2, wobei der Körper einen zweiten Hohlraum einschließt, der sich von einer Öffnung am ersten Ende des Körpers zu einem geschlossenen Boden am zweiten Ende des Körpers erstreckt, um eine zweite Längsachse des zweiten Hohlraums zu definieren.

5. Adapter nach Anspruch 4, wobei die erste Längsachse des ersten Hohlraums und die zweite Längsachse des zweiten Hohlraums die gleiche Winkelbeziehung mit der Drehachse des Rotors aufweisen, wenn der Adapter in der Rotorvertiefung des Rotors positioniert wird.

6. Adapter nach Anspruch 2, wobei der Hohlraum eine erste Bohrung (74a) mit einem Außendurchmesser, der die Öffnung des Hohlraums bildet, und eine zweite Bohrung (76a) mit einem kleineren Außendurchmesser, der einen Körper des Hohlraums bildet, einschließt, wobei die erste Bohrung dazu konfiguriert ist, einen Teil einer Probenröhrchenkappe darin aufzunehmen.

7. Adapter nach Anspruch 6, wobei zwischen der ersten und der zweiten Bohrung des Hohlraums eine Schulter (78a) gebildet wird, wobei die Schulter so konfiguriert ist, dass sie an der Probenröhrchenkappe anliegt, sodass ein Teil der Probenröhrchenkappe außerhalb des Hohlraums bleibt, wenn das Probenröhrchen darin positioniert wird.

8. Rotorbaugruppe, umfassend: einen Festwinkelrotor mit einer Vielzahl von Rotorvertiefungen, wobei jede Rotorvertiefung eine Mittelachse in einer festen Winkelbeziehung relativ zu einer Drehachse des Rotors aufweist, um für jede Rotorvertiefung einen Rotorvertiefungswinkel zu definieren; und einen Adapter nach einem der Ansprüche 1-7.

9. Rotorbaugruppe nach Anspruch 8, umfassend einen Adapter nach Anspruch 2, wobei die abgeflachte Oberfläche nicht in Eingriff mit der Rotorvertiefung steht, wenn der Adapter in der Rotorvertiefung positioniert ist.

10. Rotorbaugruppe nach Anspruch 9, wobei zwischen dem Adapter und der Rotorvertiefung ein Leerraum gebildet wird, wenn der Adapter in der Rotorvertiefung positioniert ist, oder wobei alternativ das zweite Ende des Adapters nur in Eingriff mit einem Teil eines Bodens der Rotorvertiefung steht, wenn er darin positioniert ist.

11. Rotorbaugruppe nach Anspruch 8, umfassend einen Adapter nach Anspruch 2, wobei das erste Ende des Körpers eine Orientierungsmakierung (66a) aufweist, die so konfiguriert ist, dass sie von der Drehachse des Rotors weg gerichtet ist, wenn der Adapter in der Rotorvertiefung positioniert ist, oder wobei ein Teil des ersten Endes, der die Öffnung zum Hohlraum teilweise umgibt, radial nach innen in Richtung der Drehachse des Rotors vertieft ist, oder wobei das erste Ende des Körpers eine gestufte Oberfläche (90) einschließt, die von einem unteren Abschnitt in einen erhöhten Abschnitt übergeht, wobei sich die Öffnung zum Hohlraum auf dem erhöhten Abschnitt befindet oder wobei der Körper einen oder mehrere hohle Bereiche (48b) einschließt, die sich innerhalb des Körpers und um den Hohlraum herum befinden.

12. Verfahren zur Herstellung eines Adapters zur Verwendung mit einer Rotorvertiefung eines Festwinkelrotors, umfassend:
Bereitstellen eines computerlesbaren 3D-Modells, das den Adapter definiert, wobei der Adapter einen Körper umfasst, der sich zwischen einem ersten Ende und einem zweiten Ende erstreckt und einen im Körper gebildeten Hohlraum aufweist und so konfiguriert ist, dass er ein Probenröhrchen darin aufnimmt, und wobei der Adapter ein Adapter nach einem der Ansprüche 1-7 ist, wobei der Körper so konfiguriert ist, dass er in die Rotorvertiefung des Festwinkelrotors aufgenommen wird; und Bilden des Adapters aus dem computerlesbaren 3D-Modell mit einer 3D-Druckmaschine.

13. Computerprogrammprodukt, das auf einem nichtflüchtigen computerlesbaren Medium verkörpert ist und Anweisungen speichert, die bei Ausführung die folgenden Funktionen durchführen:
Bilden eines Adapters mittels 3D-Druck, wobei der Adapter einen Körper umfasst, der sich zwischen einem ersten Ende und einem zweiten Ende erstreckt und einen im Körper gebildeten Hohlraum aufweist und so konfiguriert ist, dass er ein Probenröhrchen darin aufnimmt, und wobei der Adapter ein Adapter nach einem der Ansprüche 1-7 ist, wobei der Körper so konfiguriert ist, dass er in die Rotorvertiefung des Festwinkelrotors aufgenommen wird.

14. Computerprogrammprodukt nach Anspruch 13, wobei der Schritt des Bildens eines Adapters mittels 3D-Druck ferner Folgendes einschließt:
Bilden eines oder mehrerer hohler Bereiche, die sich im Körper und um den Hohlraum herum befinden.

## Revendications

1. Adaptateur (12a, 12b, 12c, 12d) à utiliser avec un logement de rotor (14) d'un rotor à angle fixe (10), le logement du rotor ayant un axe central (32) avec une relation angulaire fixe par rapport à un axe de rotation (20) du rotor pour définir un angle du logement du rotor, comprenant :
un corps (42a, 42b, 42c, 42d) s'étendant entre une première extrémité (44a, 44b, 44c, 44d) et une deuxième extrémité (46a, 46b, 46c, 46d) et ayant une section transversale dont la surface diminue sur la longueur du corps entre un col au niveau de la première extrémité et la deuxième extrémité, le corps étant configuré pour être reçu dans le logement du rotor à angle fixe ; et
une cavité (56a, 56b, 56c, 56d) formée dans le corps et configurée pour recevoir un tube d'échantillon, la cavité s'étendant d'une ouverture au niveau de la première extrémité du corps à une base fermée au niveau de la deuxième extrémité du corps, la cavité ayant un axe longitudinal tel que, lorsque l'adaptateur est positionné dans le logement du rotor, l'axe longitudinal de la cavité présente une relation angulaire par rapport à l'axe de rotation du rotor qui définit un angle de la cavité ;
dans lequel la surface de la section transversale est définie selon un plan disposé transversalement à l'axe longitudinal du corps et qui intersecte la cavité ; et
dans lequel l'angle de la cavité est différent de l'angle du logement du rotor.

2. Adaptateur selon la revendication 1, dans lequel le corps s'étendant entre la première extrémité et la deuxième extrémité présente une surface aplatie (50a, 50b, 50c, 50d) qui s'amincit entre un col (54a, 54b, 54c, 54d) à proximité de la première extrémité et la deuxième extrémité du corps, et la cavité est une première cavité.

3. Adaptateur selon la revendication 2, dans lequel la première extrémité présente une forme circulaire en section transversale.

4. Adaptateur selon la revendication 2, dans lequel le corps comprend une deuxième cavité qui s'étend d'une ouverture au niveau de la première extrémité du corps à une base fermée à la deuxième extrémité du corps afin de définir un deuxième axe longitudinal de la deuxième cavité.

5. Adaptateur selon la revendication 4, dans lequel le premier axe longitudinal de la première cavité et le deuxième axe longitudinal de la deuxième cavité ont la même relation angulaire avec l'axe de rotation du rotor lorsque l'adaptateur est positionné dans le logement du rotor.

6. Adaptateur selon la revendication 2, dans lequel la cavité comprend un premier alésage (74a) ayant un diamètre externe qui forme l'ouverture de la cavité et un deuxième alésage (76a) dont le diamètre externe plus petit forme le corps de la cavité, le premier alésage étant configuré pour recevoir une partie d'un capuchon de tube d'échantillon.

7. Adaptateur selon la revendication 6, dans lequel un épaulement (78a) est formé entre le premier et le deuxième alésage de la cavité, l'épaulement étant configuré pour que le capuchon du tube d'échantillon y prenne appui, de sorte qu'une partie du capuchon du tube d'échantillon reste à l'extérieur de la cavité lorsque le tube d'échantillon y est positionné.

8. Ensemble de rotor, comprenant :
un rotor à angle fixe comportant une pluralité de logements de rotor, chaque logement du rotor ayant un axe central avec une relation angulaire fixe par rapport à un axe de rotation du rotor afin de définir un angle du logement du rotor pour chaque logement du rotor ; et un adaptateur selon l'une quelconque des revendications 1 à 7.

9. Ensemble de rotor selon la revendication 8, comprenant un adaptateur selon la revendication 2, dans lequel la surface aplatie n'est pas en prise avec le logement du rotor lorsque l'adaptateur est positionné à l'intérieur du logement du rotor.

10. Ensemble de rotor selon la revendication 9, dans lequel un vide est formé entre l'adaptateur et le logement du rotor lorsque l'adaptateur est positionné dans le logement du rotor, ou, en variante, dans lequel la deuxième extrémité de l'adaptateur n'est en prise qu'avec une partie de la base du logement du rotor lorsqu'il y est positionné.

11. Ensemble de rotor selon la revendication 8, comprenant un adaptateur selon la revendication 2, dans lequel la première extrémité du corps comprend un marqueur d'orientation (66a) configuré pour être orienté à l'opposé de l'axe de rotation du rotor lorsque l'adaptateur est positionné dans le logement du rotor, ou dans lequel une partie de la première extrémité qui entoure partiellement l'ouverture de la cavité est en retrait dans une direction radialement vers l'intérieur, en direction de l'axe de rotation du rotor, ou dans lequel la première extrémité du corps comprend une surface étagée (90) qui passe d'une partie inférieure à une partie surélevée, l'ouverture de la cavité étant située sur la partie surélevée, ou dans lequel le corps comprend une ou plusieurs zones creuses (48b) situées dans le corps et autour de la cavité.

12. Procédé de fabrication d'un adaptateur à utiliser avec un logement de rotor pour rotor à angle fixe, comprenant les étapes suivantes :
fournir un modèle tridimensionnel lisible par ordinateur définissant l'adaptateur, dans lequel l'adaptateur comprend un corps s'étendant entre une première extrémité et une deuxième extrémité, le corps présentant une cavité formée dans celui-ci et étant configuré pour y recevoir un tube d'échantillon, et dans lequel l'adaptateur est un adaptateur selon l'une quelconque des revendications 1 à 7, le corps étant configuré pour être reçu dans le logement du rotor à angle fixe ; et former l'adaptateur à partir du modèle tridimensionnel lisible par ordinateur au moyen d'une imprimante 3D.

13. Produit de programme informatique incorporé sur un support lisible par ordinateur non transitoire stockant des instructions qui, lorsqu'elles sont exécutées, effectuent les fonctions suivantes :
former un adaptateur par impression 3D, dans lequel l'adaptateur comprend un corps s'étendant entre une première extrémité et une deuxième extrémité, le corps présentant une cavité formée dans celui-ci et étant configuré pour y recevoir un tube d'échantillon, et dans lequel l'adaptateur est un adaptateur selon l'une quelconque des revendications 1 à 7, le corps étant configuré pour être reçu dans le logement du rotor à angle fixe.

14. Produit de programme informatique selon la revendication 13, dans lequel l'étape de formation d'un adaptateur par impression 3D comprend en outre l'étape suivante :
former une ou plusieurs zones creuses situées dans le corps et autour de la cavité.
